(19) Europäisches Patentamt
European Patent Office
Office européen des brevets

(11) EP 1 715 496 A1

(12) # EUROPEAN PATENT APPLICATION
published in accordance with Art. 158(3) EPC

(43) Date of publication:
**25.10.2006 Bulletin 2006/43**

(21) Application number: **05709542.4**

(22) Date of filing: **01.02.2005**

(51) Int Cl.:
***H01G 9/058*** *(2006.01)* ***H01G 9/038*** *(2006.01)*

(86) International application number:
**PCT/JP2005/001396**

(87) International publication number:
**WO 2005/076299 (18.08.2005 Gazette 2005/33)**

(84) Designated Contracting States:
**DE FR GB**

(30) Priority: **03.02.2004 JP 2004026456**

(71) Applicant: **Nisshinbo Industries, Inc.**
**Chuo-ku,**
**Tokyo 103-8650 (JP)**

(72) Inventors:
- **YOSHIDA, Hiroshi, c/o Nisshinbo Industries, Inc.**
**Chiba-shi, Chiba 267-0056 (JP)**
- **SATO, Takaya, c/o Nisshinbo Industries, Inc.**
**Chiba-shi, Chiba 267-0056 (JP)**
- **MASUDA, Gen, c/o Nisshinbo Industries, Inc.**
**Chiba-shi, Chiba 267-0056 (JP)**
- **KOTANI, Mitsugu, c/o Nisshinbo Industries, Inc.**
**Chiba-shi, Chiba 267-0056 (JP)**
- **IIZUKA, Shunsuke, c/o Nisshinbo Industries, Inc.**
**Chiba-shi, Chiba 267-0056 (JP)**

(74) Representative: **Stuart, Ian Alexander et al**
**Mewburn Ellis LLP**
**York House**
**23 Kingsway**
**London WC2B 6HP (GB)**

(54) **ELECTRIC DOUBLE LAYER CAPACITOR**

(57) Disclosed is an electric double layer capacitor which is excellent in rate characteristics and low-temperature characteristics while having a high capacitance even when an electrolyte solution containing a high-concentration ionic liquid is used. Specifically disclosed is an electric double layer capacitor comprising a pair of polarizable electrodes and an electrolyte solution. As the polarizable electrodes, there is used one mainly composed of an activated carbon which has the peak in the micropore radius distribution determined by the MP method within a range from $5.0\times10^{-10}$ to $1.0\times10^{-9}$ m. As the electrolyte solution, there is used an ionic liquid having a concentration of more than 2.0 mol/L.

EP 1 715 496 A1

**Description**

TECHNICAL FIELD

The present invention relates to an electric double layer capacitor.

BACKGROUND ART

Nonaqueous electric double layer capacitors can be charged and discharged at a high current, and thus hold considerable promise as energy storage devices for such applications as electric cars and auxiliary power supplies.
Prior-art nonaqueous electric double layer capacitors are constructed of positive and negative polarizable electrodes made primarily of a carbonaceous material such as activated carbon, and a nonaqueous electrolyte solution. The composition of the nonaqueous electrolyte solution is known to have a large influence on the withstand voltage and electrostatic capacitance of the capacitor.
The nonaqueous electrolyte solution is composed of an electrolyte salt and a nonaqueous organic solvent. Studies have been conducted on various combinations of such electrolyte salts and nonaqueous organic solvents.
In particular, quaternary ammonium salts (e.g., Patent Document 1: JP-A 61-32509; Patent Document 2: JP-A 63-173312; Patent Document 3: JP-A 10-55717) and quaternary phosphonium salts (e.g., Patent Document 4: JP-A 62-252927) are commonly used as the electrolyte salt because of their solubility and degree of dissociation in organic solvents, as well as their broad electrochemical stability range.
In addition, the use of dialkylimidazolium salts, which are ionic liquids, as the electrolyte salt has also been reported (Patent Document 5: JP-A 6-61095; Patent Document 6: JP-A 2002-110472).
The polarizable electrodes are generally composed of activated carbon. This activated carbon is made by carbonizing any of various suitable starting materials, examples of which include natural substances such as coconut shells and sawdust, synthetic resins such as phenolic resins and polyimide resins, and also coal-based pitch, petroleum-based pitch, mesophase carbon, carbon fibers and discarded tires. The carbonized material is then activated, such as by gas activation with steam or carbon dioxide, or by chemical activation using zinc chloride, potassium hydroxide or phosphoric acid. Polarizable electrodes having a large electrostatic capacitance can be obtained by controlling such parameters as the specific surface area and pore volume of the activated carbon, or the crystal structure of the carbon.
However, in electric double layer capacitors where solid quaternary salts are used as the electrolyte salt, the quaternary salt readily deposits out of solution at low temperatures, and particularly at very low temperatures of -20°C or below. Even in the absence of such deposition, the electrical conductivity falls off dramatically at low temperatures.
When dialkylimidazolium salts, as ionic liquids, are used to resolve this problem, mixed systems of these salts with inorganic salts are very sensitive to such factors as humidity in the air, and are thus difficult to handle. Moreover, imidazolium salts themselves have drawbacks; namely they have melting points which are not as low as might be desired, and they also have a relatively narrow potential window.
To resolve such problems, the inventors earlier disclosed an electric double layer capacitor which uses an ionic liquid as the electrolyte salt, and in which the activated carbon making up the polarizable electrodes is one having micropores with a pore radius distribution peak, as determined by what is known as the "MP method," within a specific range (International Application PCT/JP03/10630). This electric double layer capacitor has, at low temperatures, both excellent charge-discharge characteristics and a low internal impedance.
Patent Document 1: JP-A 61-32509
Patent Document 2: JP-A 63-173312
Patent Document 3: JP-A 10-55717
Patent Document 4: JP-A 62-252927
Patent Document 5: JP-A 6-61095
Patent Document 6: JP-A 2002-110472

DISCLOSURE OF THE INVENTION PROBLEMS TO BE SOLVED BY THE INVENTION

However, in such electric double layer capacitors which contain an ionic liquid as the electrolyte salt and which use an activated carbon having micropores with a pore radius distribution peak as determined by the MP method within a specific range, when the concentration of the ionic liquid for increasing the amount of ions present between the polarizable electrodes is raised so as to elevate the energy density per unit volume, contrary to this intended aim, it sometimes happens that the capacitance during large-current discharge decreases, and moreover that the charge-discharge characteristics of the electric double layer capacitor decline and the internal impedance rises.
It is therefore an object of the invention to provide an electric double layer capacitor which, even when made using an electrolyte containing a high concentration of ionic liquid, has an excellent rate capability and low-temperature

properties, and also has a high capacitance.

MEANS FOR SOLVING THE PROBLEMS

In order to achieve the above object, we have conducted extensive investigations on the relationship between the concentration of the ionic liquid and the pore size distribution of the activated carbon. As a result, we have discovered that using an electrolyte containing more than 2.0 mol/L of an ionic liquid in an electric double layer capacitor shifts the peak of the pore radius distribution of micropores in the activated carbon making up the polarizable electrodes so that it is somewhat wider than when an electrolyte containing 2.0 mol/L or less of the ionic liquid is used, making it possible to reliably prevent both a decrease in the rate capability, and also a decrease in the charge-discharge characteristics and an increase in the internal impedance at low temperature.
Accordingly, the present invention provides the following electric double layer capacitors.

[1] An electric double layer capacitor composed of a pair of polarizable electrodes and an electrolyte; which electric double layer capacitor is characterized in that the polarizable electrodes are composed primarily of activated carbon having micropores with a pore radius distribution peak as determined by the MP method in a range of $5.0\times10^{-10}$ to $1.0\times10^{-9}$ m, and the electrolyte includes at least an ionic liquid in a concentration of more than 2.0 mol/L.
[2] The electric double layer capacitor of [1] which is characterized in that the electrolyte is composed solely of the ionic liquid.
[3] The electric double layer capacitor of [1] or [2] which is characterized in that the electrolyte includes two or more ionic liquids.
[4] The electric double layer capacitor of any one of [1] to [3] which is characterized in that the ionic liquid is a quaternary ammonium salt or a quaternary phosphonium salt.
[5] The electric double layer capacitor of any one of [1] to [4] which is characterized in that the ionic liquid has the following general formula (1)

[Chemical Formula 1]

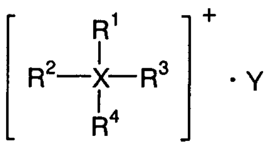
···(1)

wherein $R^1$ to $R^4$ are each independently an alkyl group of 1 to 5 carbons or an alkoxyalkyl group of the formula R'-O-$(CH_2)_n$- (R' being methyl or ethyl, and the letter n being an integer from 1 to 4) and any two from among $R^1$, $R^2$, $R^3$ and $R^4$ may together form a ring, with the proviso that at least one of $R^1$ to $R^4$ is an alkoxyalkyl group of the above formula; X is a nitrogen atom or a phosphorus atom; and Y is a monovalent anion.
[6] The electric double layer capacitor of any one of [1] to [5] which is characterized in that the ionic liquid has the following formula (2)

[Chemical Formula 2]

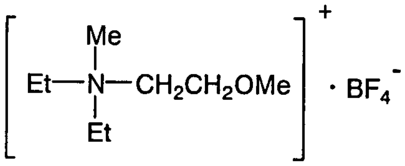
···(2)

wherein Me stands for methyl and Et stands for ethyl.
[7] The electric double layer capacitor of any one of [1] to [6], wherein the activated carbon is a chemically activated product of at least one carbonized material selected from among coal-based pitch, petroleum-based pitch, coke and mesophase carbon.

ADVANTAGEOUS EFFECTS OF THE INVENTION

In the electric double layer capacitor of the invention, because the polarizable electrodes are composed primarily of activated carbon having micropores with a pore radius distribution peak as determined by the MP method in a range of $5.0\times10^{-10}$ to $1.0\times10^{-9}$ m, even when an electrolyte containing more than 2.0 mol/L of an ionic liquid is used, the capacitor has an excellent rate capability and has excellent charge-discharge characteristics at low temperature, in addition to which the internal impedance at low temperatures can be lowered.
Moreover, because ionic liquids composed of quaternary ammonium salts and quaternary phosphonium salts have a broader potential window than imidazolium- or pyridinium-type ionic liquids, by using such an ionic liquid as the electrolyte, the voltage rating can be raised and the amount of ions present per unit volume can be increased, enabling an electric double layer capacitor having a high energy density to be obtained.

BEST MODE FOR CARRYING OUT THE INVENTION

The invention is described more fully below.
The electric double layer capacitor of the invention includes a pair of polarizable electrodes and an electrolyte, and is characterized in that the polarizable electrodes are composed primarily of activated carbon having micropores with a pore radius distribution peak as determined by the MP method in a range of $5.0\times10^{-10}$ to $1.0\times10^{-9}$ m, and the electrolyte includes at least an ionic liquid in a concentration of more than 2.0 mol/L.
In the practice of the invention, the ionic liquid, while not subject to any particular limitation, is preferably a quaternary ammonium salt or a quaternary phosphonium salt, and most preferably an ionic liquid of the following general formula (1):
[Chemical Formula 3]

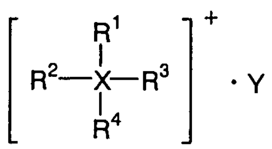

· · · (1)

In the formula, $R^1$ to $R^4$ are each independently an alkyl group of 1 to 5 carbons or an alkoxyalkyl group of the formula $R'-O-(CH_2)_n-$ (R' being methyl or ethyl, and the letter n being an integer from 1 to 4) and any two from among $R^1$, $R^2$, $R^3$ and $R^4$ may together form a ring, with the proviso that at least one of $R^1$ to $R^4$ is an alkoxyalkyl group of the above formula; X is a nitrogen atom or a phosphorus atom; and Y is a monovalent anion.
Examples of alkyls having 1 to 5 carbons include methyl, ethyl, propyl, 2-propyl, butyl and pentyl. However, given that a smaller ionic radius affords better ionic mobility within the liquid electrolyte, it is preferable for at least one of groups $R^1$ to $R^4$ to be methyl, ethyl or propyl, and especially methyl or ethyl. The ethyl or propyl group may form a ring with another alkyl group.
Examples of alkoxyalkyl groups of the formula $R'-O-(CH_2)_n-$ include methoxymethyl, ethoxymethyl, methoxyethyl, ethoxyethyl, methoxypropyl, ethoxypropyl, methoxybutyl and ethoxybutyl. The letter n is an integer from 1 to 4. However, to increase the stability of the ionic liquid, the letter n is preferably 1 or 2, and most preferably 2.
Exemplary compounds in which any two groups from among $R^1$ to $R^4$ form a ring include, when X is a nitrogen atom, quaternary ammonium salts containing an aziridine, azetidine, pyrrolidine or piperidine ring; and, when X is a phosphorus atom, quaternary phosphonium salts containing a pentamethylenephosphine (phosphorinane) ring.
Specific examples of quaternary ammonium salts and quaternary phosphonium salts suitable for use in the invention include compounds (2) to (11) below (wherein Me stands for methyl and Et stands for ethyl). The quaternary salt of formula (2) below, which bears as substituents a methyl group, two ethyl groups and a methoxyethyl group, and which includes as the anion $BF_4^-$, is especially preferred. The use of this ionic liquid as the electrolyte salt enables an electric double layer capacitor having excellent charge-discharge characteristics at even lower temperatures to be obtained.
[Chemical Formula 4]

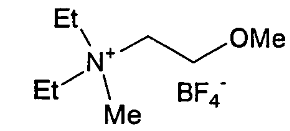
··· (2)

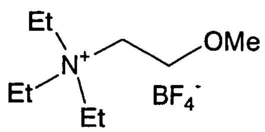
··· (3)

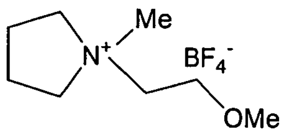
··· (4)

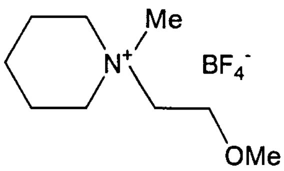
··· (5)

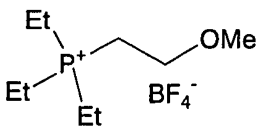
··· (6)

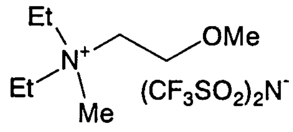
··· (7)

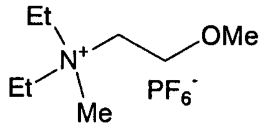
··· (8)

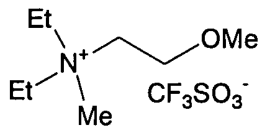
··· (9)

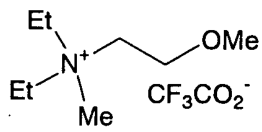
··· (10)

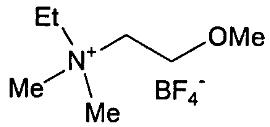
··· (11)

Illustrative, non-limiting, examples of the monovalent anion Y include $BF_4^-$, $PF_6^-$, $AsF_6^-$, $SbF_6^-$, $AlCl_4^-$, $HSO_4^-$, $ClO_4^-$, $CH_3SO_3^-$, $CF_3SO_3^-$, $CF_3CO_2^-$, $(CF_3SO_2)_2N^-$, $Cl^-$, $Br^-$ and $I^-$. To provide such properties as a high degree of dissociation, good stability and good mobility in nonaqueous organic solvents, the use of $BF_4^-$, $PF_6^-$, $(CF_3SO_2)_2N^-$, $CF_3SO_3^-$ or $CF_3CO_2^-$ is preferred.
Of these anions, the use of $(CF_3SO_2)_2N^-$ is especially preferred for further lowering the viscosity of the ionic liquid and increasing its handleability. $BF_4^-$ is also very desirable because the resulting ionic liquid has a high versatility and it is less readily affected by water than ionic liquids containing $PF_6^-$ as the anion, and thus easier to handle.

A common method for synthesizing such quaternary ammonium salts is described. First, a tertiary amine is mixed with a compound such as an alkyl halide or a dialkyl sulfate and reacted under heating, if necessary, to give a quaternary ammonium halide. In cases where a compound having a low reactivity (e.g., an alkoxyethyl halide or an alkoxymethyl halide) is used, reaction under applied pressure, such as in an autoclave, is preferred.
The resulting quaternary ammonium halide is dissolved in an aqueous solvent such as water, then reacted with a reagent that generates the required anionic species, such as tetrafluoroboric acid or tetrafluorophosphoric acid, so as to effect an anion exchange reaction, yielding the quaternary ammonium salt. Alternatively, if the quaternary ammonium halide is soluble in an organic solvent, the halide may be reacted with a silver salt of the required anionic species so as to effect an anion exchange reaction and thereby yield the quaternary ammonium salt.

Quaternary phosphonium salts can generally be synthesized in much the same way as quaternary ammonium salts. Typically, a tertiary phosphine is mixed with a suitable compound such as an alkyl halide or a dialkyl sulfate. If necessary, the reaction is carried out under the application of heat. As in the case of quaternary ammonium salts, quaternary phosphonium salts containing any of various suitable anions may be prepared by dissolving a quaternary phosphonium halide (a chloride, bromide or iodide) in an aqueous solvent and reacting the dissolved halide with a reagent that generates the required anionic species so as to effect an anion exchange reaction.

The above ionic liquid has a melting point not higher than 50°C, preferably not higher than 30°C, and most preferably not higher than 20°C. If the melting point is higher than 50°C, the ionic liquid will deposit out within the electrolyte at low temperatures, not only increasing the likelihood of a decline in the ionic conductivity, but also making the ionic liquid unsuitable for solitary use. The lower the melting point of the ionic liquid, the more desirable. The melting point has no particular lower limit.

Because the ionic liquid of the invention has a lower melting point than imidazolium ion-containing ionic liquids already familiar to the art, by using an electrolyte containing the above ionic liquid, an electric double layer capacitor having even better low-temperature characteristics can be obtained.

Also, because the above ionic liquid has a broader potential window than imidazolium ion-containing ionic liquids, it does not readily undergo reductive decomposition during charging and discharging. As a result, a highly stable electric double layer capacitor can be obtained.

The electrolyte used in the electric double layer capacitor of the invention is one which includes at least an ionic liquid and in which the concentration of the ionic liquid is more than 2.0 mol/L. There is no particular upper limit on the concentration of the ionic liquid; it is even possible for the electrolyte to be composed solely of the ionic liquid. A high concentration of ionic liquid in the electrolyte enables a sufficient amount of ions to be supplied to the polarizable electrodes which recently have achieved an increased ability to adsorb ions and a higher capacitance, and also makes it possible to increase the stability of the electric double layer capacitor.

As used herein, "electrolyte composed solely of the ionic liquid" signifies that the actions of both the electrolyte salt and the nonaqueous organic solvent which serve as the essential ingredients in an ordinary electrolyte are effected solely by the ionic liquid. Even if the electrolyte is composed solely of an ionic liquid, any additives such as those described subsequently which are commonly used in electrolytes may of course be included where necessary.

It is also possible to have the electrolyte be composed of two or more ionic liquids. By mixing in this way an ionic liquid which has a large degree of ion dissociation yet is highly viscous with an ionic liquid having the opposite characteristics, there can be obtained an electrolyte having a high ionic conductivity over a broad temperature range.

It is also possible to add a gelling agent or the like to solidify the ionic liquid and form a solid electrolyte. In such cases, a separator must placed between the polarizable electrodes.

If the electrolyte is not one composed solely of an ionic liquid, the ionic liquid is mixed and used together with a nonaqueous organic solvent. Any nonaqueous organic solvent which is capable of dissolving the ionic liquid, has a small molecular diameter, and is stable within the working voltage range of the electric double layer capacitor may be used without particular limitation. However, it is preferable for the nonaqueous organic solvent to be one having a high dielectric constant, a broad electrochemical stability range, a broad service temperature range, and excellent safety.

Illustrative examples of suitable solvents include nitriles such as acetonitrile and propionitrile; acyclic ethers such as dibutyl ether, 1,2-dimethoxyethane, 1,2-ethoxymethoxyethane, methyl diglyme, methyl triglyme, methyl tetraglyme, ethyl glyme, ethyl diglyme, butyl diglyme, and glycol ethers (e.g., ethyl cellosolve, ethyl carbitol, butyl cellosolve, butyl carbitol); heterocyclic ethers such as tetrahydrofuran, 2-methyltetrahydrofuran, 1,3-,dioxolane and 4,4-dimethyl-1,3-dioxane; butyrolactones such as γ-butyrolactone, γ-valerolactone, δ-valerolactone, 3-methyl-1,3-oxazolidin-2-one and 3-ethyl-1,3-oxazolidin-2-one; and other solvents commonly used in electrochemical devices, such as amide solvents (e.g., N-methylformamide, N,N-dimethylformamide, N-methylacetamide, N-methylpyrrolidinone), carbonate solvents (e.g., diethyl carbonate, dimethyl carbonate, ethyl methyl carbonate, propylene carbonate, ethylene carbonate, styrene carbonate), and imidazolidinone solvents (e.g., 1,3-dimethyl-2-imidazolidinone). Any one or mixtures of two or more of these solvents may be used.

Of these solvents, propylene carbonate is especially preferred because it has a good ability to dissolve the electrolyte salt even at very low temperatures of -20°C or less, an excellent electrical performance, and a relatively high flash point during use at elevated temperatures.

The electrolyte used in the inventive electric double layer capacitor may include, regardless of the ionic liquid concentration therein, any of various additives commonly used in electrolytes, such as surfactants, decomposition inhibitors, dehydrating agents, dehalogenating agents and flame retardants. The amount of these additives, while not subject to any particular limitation, is generally not more than 20 wt%.

The polarizable electrodes used in the electric double layer capacitor of the invention contain as a main component an activated carbon having micropores with a pore radius distribution peak as determined by the MP method within a range of $5.0 \times 10^{-10}$ to $1.0 \times 10^{-9}$ m (5.0 to 10 Å), preferably $5.5 \times 10^{-10}$ to $9.0 \times 10^{-10}$ m (5.5 to 9.0 Å), and more preferably $6.0 \times 10^{-10}$ to $8.0 \times 10^{-10}$ m (6.0 to 8.0 Å).

If the pore radius distribution peak for micropores in the activated carbon as determined by the MP method is lower than $5.0 \times 10^{-10}$ m, the rate capability when the concentration of the ionic liquid in the electrolyte is made greater than 2.0 mol/L decreases and there is a high probability that the charge-discharge characteristics at low temperatures will worsen. On the other hand, at a pore radius distribution peak higher than $1.0 \times 10^{-9}$ m, maintaining a large specific surface area in the activated carbon is difficult, raising the possibility that the capacitance may decrease due to a smaller specific surface area.

"MP method," as used herein, refers to a method commonly used in micropore analysis. The results of BET measurements are t-plotted and the curvature in areas near bends in the plot is computed. The pore radius distribution and peak in this invention are values determined from the results of BET measurements based on nitrogen gas adsorption. Specifically, the thickness of the adsorption layer is computed from the relative pressure using the DeBore's equation (see J.C.P. Broekhoff and J.H. DeBore: J. Catalysis 9 (1967), p. 15), a correlation plot (t-plot) of the adsorption layer thickness and the amount of nitrogen gas adsorption at the boiling point of -195.8°C is prepared, the surface area for each interval is computed from the amount of change in the slope of the tangent at each point on the correlation plot, and the pore volume is determined from the amounts of change in these surface areas (see R.SH Mikhail, S. Brunauer and E.E. Bodor: Journal of Colloid and Interface Science 26 (1968), pp. 45-53).

The activated carbon may be prepared from any suitable starting material, provided the pore radius distribution peak of the micropores can be set within the above-indicated range. Starting materials that may be used include coconut shells, coffee beans, bamboo, sawdust, coal-based pitch, petroleum-based pitch, coke, mesophase carbon, phenolic resins and vinyl chloride resins. However, to form a graphite microstructure after firing and activation and thus enable the resulting capacitor to have a small internal resistance, it is preferable for the activated carbon to be at least one type of carbonized material selected from among coal-based pitch, petroleum-based pitch, coke and mesophase carbon.

The method of activation is not subject to any particular limitation. Examples of such techniques that may be used include chemical activation using a suitable chemical such as potassium hydroxide, sodium hydroxide, zinc chloride or phosphoric acid; and gas activation using a suitable gas such as carbon dioxide, oxygen or steam. Of these, when activating a readily graphitizable carbon material such as coal-based pitch, petroleum-based pitch, coke or mesophase carbon, pores can be efficiently formed by a chemical activation method that uses potassium hydroxide or sodium hydroxide. However, when chemical activation is used, the peak in the pore radius distribution tends to become narrow. Therefore, to optimize the pore radius distribution in the activated carbon used in the present invention, it is advantageous to control the pore radius distribution by carrying out chemical activation and additionally carrying out as well secondary activation such as steam activation.

Activated carbon exists in a variety of forms, including crushed material, granulated material, pellets, fibers, felt, woven fabric and sheets, any of which may be used in the invention.

The above-described polarizable electrodes are largely composed of activated carbon having the above-indicated pore radius distribution, and may be of a type fabricated by blending a binder polymer into this activated carbon to form a polarizable electrode composition, then coating the composition onto a current collector.

Here, the binder polymer may be any known polymer capable of being used in applications to which this invention relates. Illustrative examples include polytetrafluoroethylene, polyvinylidene fluoride, carboxymethyl cellulose, fluoroolefin copolymer-crosslinked polymers, polyvinyl alcohols, polyacrylic acids, polyimides, petroleum pitch, coal pitch, and phenolic resins.

These binder polymers are preferably added in an amount of 0.5 to 20 parts by weight, and especially 1 to 10 parts by weight, per 100 parts by weight of the activated carbon.

The method of preparing the polarizable electrode composition is not subject to any particular limitation. For example, the composition may be prepared in the form of a solution from the above-described activated carbon and a binder polymer, or it may be prepared by adding a solvent, if necessary, to this solution.

The polarizable electrode composition thus obtained is coated onto a current collector to form a polarizable electrode. Any suitable known coating method may be used at this time, such as doctor blade coating or air knife coating. Any current collector commonly used in electric double layer capacitors may be selected for use as the current collector in the positive and negative electrodes. The positive electrode current collector is preferably aluminum foil or aluminum oxide foil, and the negative electrode current collector is preferably copper foil, nickel foil, or a metal foil on the surface of which has been formed a copper plating film or nickel plating film.

The foils making up the respective current collectors may be in any of various forms, including thin foils, flat sheets, and perforated, stampable sheets. The foil has a thickness of generally about 1 to 200 μm. However, taking into account, for example, the density of the activated carbon over the entire electrode and the strength of the electrode, a thickness of 8 to 100 μm is preferred, and a thickness of 8 to 30 μm is especially preferred.

Alternatively, the polarizable electrodes may be fabricated by melt-blending the polarizable electrode composition, then extruding the blend as a film.

A conductive material may be added to the above-described activated carbon. The conductive material may be any suitable material capable of conferring electrical conductivity to the activated carbon. Illustrative, non-limiting, examples include carbon black, Ketjenblack, acetylene black, carbon whiskers, carbon fibers, natural graphite, artificial graphite, titanium oxide, ruthenium oxide, and metallic fibers such as aluminum or nickel fibers. Any one or combination of two or more thereof may be used. Of these, Ketjenblack and acetylene black, both of which are types of carbon black, are preferred.

The average particle size of the conductive material is not subject to any particular limitation, although a size of 10 nm to 10 μm, preferably 10 to 100 nm, and more preferably 20 to 40 nm, is desirable. It is particularly advantageous

for the conductive material to have an average particle size which is from 1/5000 to 1/2, and preferably from 1/1000 to 1/10, as large as the average particle size of the activated carbon.
The amount of conductive material included is not subject to any particular limitation, although addition of the conductive material in an amount of 0.1 to 20 parts by weight, and preferably 0.5 to 10 parts by weight, per 100 parts by weight of the activated carbon is desirable in light of such considerations as the capacitance and the conductivity-imparting effects.
The separator used when employing a liquid electrolyte may be one that is commonly used in electric double layer capacitors. Illustrative examples include polyolefin nonwoven fabric, polytetrafluoroethylene porous film, kraft paper, admixed paper made from rayon fibers and sisal hemp fibers, manila hemp sheet, glass fiber sheet, cellulose-based electrolytic paper, paper made from rayon fibers, admixed paper made from cellulose and glass fibers, and combinations thereof in the form of multilayer sheets.
The electric double layer capacitor of the invention can be assembled by stacking, fan-folding or winding an electric double layer capacitor assembly composed of a pair of polarizable electrodes produced as described above and, if necessary, a separator therebetween. The cell assembly is then placed within a capacitor housing such as a can or a laminate pack. The assembly is then filled with the liquid electrolyte, following which the housing is mechanically sealed if it is a can or heat-sealed if it is a laminate pack.
The inventive electric double layer capacitor described above is highly suitable for use as a memory backup power supply for cell phones, notebook computers and wireless terminals, as a power supply for cell phones and portable acoustic devices, as an uninterruptible power supply for personal computers and other equipment, and as various types of low-current electrical storage devices such as load leveling power supplies used in combination with solar power generation or wind power generation. Moreover, electric double layer capacitors capable of being charged and discharged at a high current are suitable for use as high-current electrical storage devices in applications that require a large current, such as electric cars and electrical power tools.

## EXAMPLES

The following Synthesis Examples, Examples and Comparative Examples are provided to illustrate the invention and do not in any way limit the invention.
Synthesis Example 1: Synthesis of Compound (2)

[Chemical Formula 5]

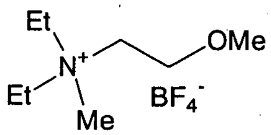

···(2)

A solution prepared by mixing together 100 ml of diethylamine (Kanto Chemical Co., Inc.) and 85 ml of 2-methoxyethyl chloride (Kanto Chemical) was placed in an autoclave and reacted at 100°C for 24 hours. The internal pressure during the reaction was 0.127 MPa (1.3 kgf/$cm^2$). To the mixture of deposited crystals and reaction solution obtained after 24 hours of reaction was then added 200 ml of an aqueous solution containing 56 g of dissolved potassium hydroxide (Katayama Chemical Industries Co., Ltd.). Of the two layers that formed as a result, the organic phase was separated off with a separatory funnel and twice subjected to extraction with 100 ml of methylene chloride (Wako Pure Chemical Industries, Ltd.) each time. The portions of the organic phase were then combined and washed with a saturated saline solution, following which potassium carbonate (Wako Pure Chemical Industries) was added to remove water, and vacuum filtration was carried out. The solvent in the resulting organic phase was distilled off using a rotary evaporator, after which the residue was subjected to normal-pressure distillation, yielding 18.9 g of a fraction having a boiling point close to 135°C. This compound was confirmed from a $^1$H-nuclear magnetic resonance (abbreviated hereinafter as "NMR") spectrum to be 2-methoxyethyldiethylamine.
Next, 8.24 g of the 2-methoxyethyldiethylamine was dissolved in 10 ml of tetrahydrofuran (Wako Pure Chemical Industries), then 4.0 ml of methyl iodide (Wako Pure Chemical Industries) was added under ice cooling. After 30 minutes, the mixture was removed from the ice bath and stirred overnight at room temperature. The solvent in the resulting reaction solution was subsequently driven off by vacuum distillation, and the resulting solids were recrystallized from an ethanol (Wako Pure Chemical Industries) - tetrahydrofuran system, yielding 16 g of 2-methoxyethyldiethylmethylammonium iodide.
Next, 15.0 g of the 2-methoxyethyldiethylmethylammonium iodide was dissolved in 100 ml of distilled water, following which 6.37 g of silver oxide (Kanto Chemical) was added and stirring was carried out for 3 hours. The reaction

mixture was then vacuum filtered to remove the precipitate, following which 42% tetrafluoroboric acid (Kanto Chemical) was gradually added under stirring until the reaction solution reached a pH of about 5 to 6. This reaction solution was subsequently freeze-dried, in addition to which water was thoroughly driven off using a vacuum pump, yielding 12.39 g of a compound (2) that was liquid at room temperature (25°C).

Synthesis Example 2: Synthesis of Compound (11)

[Chemical Formula 6]

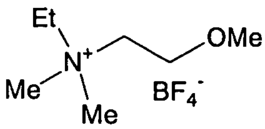

···(11)

First, 100 ml of a 2.0 M dimethylamine-tetrahydrofuran solution (Aldrich Chemical Co., Ltd.) and 9.1 ml of 2-methoxyethyl chloride (Kanto Chemical) were mixed, and the mixture was reacted in an autoclave at 100°C for 12 hours. The internal pressure during the reaction was 0.36 MPa (3.7 kgf/$cm^2$). The crystals that had formed in the reaction solution after 12 hours of reaction were filtered off, and the filtrate was subjected to distillation so as to remove most of the tetrahydrofuran, thereby giving a clear liquid that was a dimethyl-2-methoxyethyl mixture.

Next, 8.0 ml of methyl iodide (Wako Pure Chemical Industries) was added to this liquid under ice cooling, following which the ice bath was removed and the mixture was stirred overnight. The resulting reaction mixture was vacuum distilled, giving 3.04 g of the salt 2-methoxyethylethyl-dimethylammonium iodide as an oil.

Next, 2.28 g of silver tetrafluoroborate was weighed out, 30 ml of a 1:1 (by volume) chloroform-acetonitrile mixed solvent was added and the mixture was stirred. To the resulting suspension was added a solution of 3.04 g of the 2-methoxyethyldimethylammonium iodide prepared above in 30 ml of 1:1 chloroform-acetonitrile, and the resulting mixture was stirred for 80 minutes. The crystals that formed were removed by vacuum filtration, following which the solvent within the filtrate was driven off with an evaporator and a vacuum pump.

Next, 2.85 g of the residue was purified by silica gel column chromatography using Wakogel (C-200, produced by Wako Pure Chemical Industries, Ltd.) and a 1:1 (by volume) mixture of chloroform and methanol as the eluting solvent, yielding 1.57 g of compound (11) which was liquid at room temperature (25°C).

Synthesis Example 3: Synthesis of Compound (7)

[Chemical Formula 7]

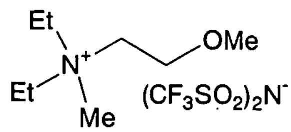

···(7)

First, 10.0 g of 2-methoxyethyldiethylmethylammonium iodide obtained by the same method as in Synthesis Example 1 was dissolved in 50 mL of acetonitrile (Kanto Chemical). Next, 9.5 g of lithium bis(trifluoromethanesulfonyl) imide (Kishida Chemical Co., Ltd.) was added to the solution and completely dissolved therein, after which the system was stirred for 15 minutes.

The acetonitrile was subsequently removed by vacuum distillation, and water was added to the residue. Of the two layers that formed as a result, the organic phase was separated off and washed five times with water to remove impurities.

The washed organic phase was placed under a reduced pressure using a vacuum pump and the water was thoroughly driven off, yielding 6.8 g of a compound (7) that is liquid at room temperature (25°C).

Example 1

(1) Preparation of Activated Carbon

Petroleum-based raw needle coke ground to 60 mesh or finer as the raw material, potassium hydroxide, and a 10% v/v solution of ethanol in water as the mixing solvent were thoroughly mixed in a weight ratio of raw material/potassium hydroxide/mixing solvent = 1:4:25, following which the solvent was evaporated off over a hot plate. Next, the mixture was heated to 400°C under a stream of nitrogen and dehydrated for 60 minutes. Once the generation of steam had ended, the temperature was raised further to 700°C and held at that temperature for 60 minutes, thereby effecting chemical activation.
Following the completion of chemical activation, the contents were cooled to room temperature then washed with water until alkali was no longer detectable in the wash fluid. Next, the temperature of the chemically activated product was raised to 90°C under a stream of nitrogen and in the presence of steam and held at that temperature for 60 minutes, thereby carrying out steam activation. The steam-activated product was then ground to an average particle size of 10 μm in a ball mill, yielding Activated Carbon 1 having the BET specific surface area and the pore radius distribution peak shown in Table 1.
The BET specific surface area is a value computed by the nitrogen gas adsorption method, and the pore radius distribution peak is a value computed by the MP method based on the above-described BET measurement results. The average particle size is a value that was measured using a laser diffraction type particle size analyzer (HRA, manufactured by Nikkiso Co., Ltd.).

(2) Fabrication of Capacitor Cell

An electrode slurry was prepared by mixing Activated Carbon 1, a conductive material (Denka Black HS100, made by Denki Kagaku Kogyo K.K.) and a binder polymer (PVdF900, made by Kureha Chemical Industry Co., Ltd.) in a weight ratio of activated carbon/conductive material/binder = 90:5:5 as the filling substance with N-methyl-2-pyrrolidone (abbreviated below as "NMP"; made by Katayama Chemical Industries Co., Ltd.) in a weight ratio of filling substance/NMP = 100:212.5.

The electrode slurry was applied onto one side of an $Al/AlO_x$ sheet (30CB; made by Japan Capacitor Industrial Co., Ltd.) to a coating thickness after drying of 0.070 mm, then dried (80°C) and rolled (packing density, about 0.6 $g/cm^3$) to give an electrode sheet. The electrode sheet was then vacuum dried at 150°C for 3 days, following which 12 mm diameter disks were punched from the electrode sheet to give test electrodes.
Next, using a two-electrode coin cell housing (Hokuto Denko Corporation), a coin cell was assembled from two of the above-described test electrodes together with an intervening cellulose separator (FT40-35, made by Nippon Kodoshi Corporation), and a 2.2 mol/L propylene carbonate (abbreviated below as "PC"; made by Kanto Chemical) solution of Compound (2) was used as the electrolyte to form Capacitor Cell 1.

Example 2

Aside from using a solution of 3.0 mol/L of Compound (2) in PC as the electrolyte, Capacitor Cell 2 was fabricated in the same way as in Example 1.

Example 3

Aside from using Compound (2) alone as the electrolyte, Capacitor Cell 3 was fabricated in the same way as in Example 1.

Example 4

(1) Fabrication of Activated Carbon
Aside from changing the length of time during steam activation in the preparation of Activated Carbon 1 that the temperature was held at 900° to 120 minutes, Activated Carbon 2 was obtained in the same way as in Example 1.
(2) Fabrication of Capacitor Cell
Aside from using Activated Carbon 2, Capacitor Cell 4 was fabricated in the same way as in Example 1.

Example 5

Aside from using Activated Carbon 2, Capacitor Cell 5 was fabricated in the same way as in Example 2.

Example 6

Aside from using Activated Carbon 2, Capacitor Cell 6 was fabricated in the same way as in Example 3.

Example 7

Aside from using a solution of 2.2 mol/L of Compound (11) in PC as the electrolyte, Capacitor Cell 7 was fabricated in the same way as in Example 4.

Example 8

Aside from using a solution of 3.0 mol/L of Compound (11) in PC as the electrolyte, Capacitor Cell 8 was fabricated in the same way as in Example 4.

Example 9

Aside from using Compound (11) alone as the electrolyte, Capacitor Cell 9 was fabricated in the same way as in Example 4.

Example 10

Aside from using a mixture in a volume ratio of Compound (2)/Compound (7) = 1:2 as the electrolyte, Capacitor Cell 10 was fabricated in the same way as in Example 4.

Comparative Example 1

(1) Fabrication of Activated Carbon
Petroleum-based raw needle coke ground to 60 mesh or finer as the raw material, potassium hydroxide, and a 10% v/v solution of ethanol in water as the mixing solvent were thoroughly mixed in a weight ratio of raw material/potassium hydroxide/mixing solvent = 1:4:25, following which the solvent was evaporated off over a hot plate. Next, the mixture was heated to 400°C under a stream of nitrogen and dehydrated for 60 minutes. Once the generation of steam had ended, the temperature was raised further to 700°C and held at that temperature for 60 minutes, thereby effecting chemical activation.
Following chemical activation, the contents were cooled to room temperature, washed with water until alkali was not longer detectable in the wash fluid, and dried. The resulting activated product was ground to an average particle size of 10 μm in a ball mill, thereby giving Activated Carbon 3 having the BET specific surface area and the pore radius distribution peak shown in Table 1.
(2) Fabrication of Capacitor Cell
Aside from using Activated Carbon 3, Capacitor Cell 11 was fabricated in the same way as in Example 1.

Comparative Example 2

Aside from using Activated Carbon 3, Capacitor Cell 12 was fabricated in the same way as in Example 2.

Comparative Example 3

Aside from using Activated Carbon 3, Capacitor Cell 13 was fabricated in the same way as in Example 3.

Comparative Example 4

Aside from using a solution of 1.5 mol/L of Compound (2) in PC as the electrolyte, Capacitor Cell 14 was fabricated in the same way as in Example 4.

Table 1

| Activated carbon | BET specific surface area ($m^2/g$) | Pore radius peak value (Å) |
|---|---|---|
| Activated carbon 1 | 2,590 | 6.5 |
| Activated carbon 2 | 2,440 | 7.8 |

(continued)

| Activated carbon | BET specific surface area ($m^2/g$) | Pore radius peak value (Å) |
|---|---|---|
| Activated carbon 3 | 2,080 | 4.2 |

The characteristics of Capacitor Cells 1 to 14 obtained in the above examples of the invention and the comparative examples were evaluated as described below when charged and discharged at various measurement environment temperatures and current densities in a charge/discharge system (1005SM8, manufactured by Hokuto Denko Corporation). The results are shown in Table 2. The capacitances in Table 2 indicate the capacitance per unit mass of the activated carbon.

(1) Capacitance by Environmental Temperature:

The capacitor cells were subjected to ten charge/discharge cycles at a measurement environment temperature of 25°C, -40°C or 60°C, each cycle consisting of constant-current charging from 0 V to 3.0 V at a charge current density of 1 $mA/cm^2$, constant-voltage charging for 15 minutes after reaching 3.0 V, then constant-current discharging to 0 V at a discharge current density of 1 $mA/cm^2$. In each test, the capacitance was obtained by determining the average capacitance value for the final three cycles.
The capacitance was computed from the slope of the time-voltage curve during discharge from 2.4 V to 1.2 V. Measurement in the various temperature environments was carried out after placing the test cell within a constant temperature chamber (EC-25MTP, manufactured by Hitachi, Ltd.) and holding the test cell at the temperature setting for 6 hours.

(2) Rate Capability:

Aside from setting the discharge current density at 25°C to 20 $mA/cm^2$, charge and discharge were carried out in the same way as described above, and the percent retention relative to the capacitance during 1 $mA/cm^2$ discharge at 25°C was computed.

(3) Cycle Characteristics:

Each of Capacitor Cells 4 to 6 and 13 was subjected to 1,000 charge-discharge cycles at 25°C and a discharge current density of 1 $mA/cm^2$, and the percent retention of capacitance in the 1,000th cycle with respect to the 10th cycle was computed.

Table 2

| | | Activated carbon No. | Electrolyte | | Cell No. | Capacitance (F/g) | | | Rate capability (%) | Cycle characteristics (%) |
|---|---|---|---|---|---|---|---|---|---|---|
| | | | Electrolyte salt | Concentration (mol/L) | | 25° C | -40° C | 60° C | | |
| Example | 1 | 1 | Compound 2 | 2.2 | 1 | 54 | 50 | 52 | 73 | -- |
| | 2 | 1 | Compound 2 | 3.0 | 2 | 50 | 45 | 50 | 48 | -- |
| | 3 | 1 | Compound 2 | 100% | 3 | 51 | 46 | 54 | 36 | -- |
| | 4 | 2 | Compound 2 | 2.2 | 4 | 45 | 42 | 46 | 74 | 89 |
| | 5 | 2 | Compound 2 | 3.0 | 5 | 46 | 42 | 47 | 52 | 88 |
| | 6 | 2 | Compound 2 | 100% | 6 | 48 | 44 | 48 | 41 | 91 |
| | 7 | 2 | Compound 11 | 2.2 | 7 | 43 | 40 | 43 | 79 | -- |
| | 8 | 2 | Compound 11 | 3.0 | 8 | 47 | 43 | 47 | 57 | -- |
| | 9 | 2 | Compound 11 | 100% | 9 | 47 | 43 | 48 | 45 | -- |
| | 10 | 2 | Compounds 2 and 7 = 1:2 (v/v) | 100% | 10 | 45 | 43 | 45 | 77 | -- |
| Comparative Example | 1 | 3 | Compound 2 | 2.2 | 11 | 46 | 41 | 47 | 44 | -- |
| | 2 | 3 | Compound 2 | 3.0 | 12 | 43 | 37 | 46 | 22 | -- |
| | 3 | 3 | Compound 2 | 100% | 13 | 39 | 33 | 46 | 26 | -- |
| | 4 | 2 | Compound 2 | 1.5 | 14 | 45 | 43 | 36 | 88 | 74 |

As is apparent from Table 2, capacitor cells which use activated carbon having a broad pore radius peak value exhibit a stable capacitance at all environmental temperatures.
The rate capability worsens as the concentration of the ionic liquid in the electrolyte rises, but this appears to be due to the rise in the electrolyte viscosity. This phenomenon shows some improvement in capacitor cells in which activated carbon having a broad pore radius peak value was used.
The retention of cycle characteristics rose as the concentration of ionic liquid in the electrolyte became higher. It was thus apparent that the durability improves at higher concentrations of the ionic liquid.

## Claims

1. An electric double layer capacitor comprising a pair of polarizable electrodes and an electrolyte;
which electric double layer capacitor is **characterized in that** the polarizable electrodes are composed primarily of activated carbon having micropores with a pore radius distribution peak as determined by the MP method in a range of $5.0\times10^{-10}$ to $1.0\times10^{-9}$ m, and the electrolyte includes at least an ionic liquid in a concentration of more than 2.0 mol/L.

2. The electric double layer capacitor of claim 1 which is **characterized in that** the electrolyte is composed solely of the ionic liquid.

3. The electric double layer capacitor of claim 1 or 2 which is **characterized in that** the electrolyte includes two or more ionic liquids.

4. The electric double layer capacitor of any one of claims 1 to 3 which is **characterized in that** the ionic liquid is a quaternary ammonium salt or a quaternary phosphonium salt.

5. The electric double layer capacitor of any one of claims 1 to 4 which is **characterized in that** the ionic liquid has

the following general formula (1)

[Chemical Formula 1]

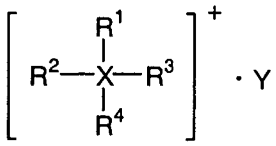

· · · (1)

wherein $R^1$ to $R^4$ are each independently an alkyl group of 1 to 5 carbons or an alkoxyalkyl group of the formula R'-O-$(CH_2)_n$- (R' being methyl or ethyl, and the letter n being an integer from 1 to 4) and any two from among $R^1$, $R^2$, $R^3$ and $R^4$ may together form a ring, with the proviso that at least one of $R^1$ to $R^4$ is an alkoxyalkyl group of the above formula; X is a nitrogen atom or a phosphorus atom; and Y is a monovalent anion.

**6.** The electric double layer capacitor of any one of claims 1 to 5 which is **characterized in that** the ionic liquid has the following formula (2)

[Chemical Formula 2]

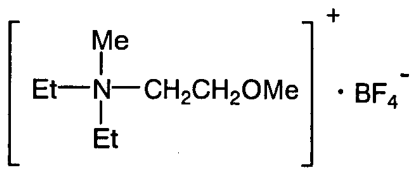

· · · (2)

wherein Me stands for methyl and Et stands for ethyl.

**7.** The electric double layer capacitor of any one of claims 1 to 6, wherein the activated carbon is a chemically activated product of at least one carbonized material selected from among coal-based pitch, petroleum-based pitch, coke and mesophase carbon.

**INTERNATIONAL SEARCH REPORT**

International application No.
PCT/JP2005/001396

A. CLASSIFICATION OF SUBJECT MATTER
Int.Cl[7] H01G9/058, 9/038

According to International Patent Classification (IPC) or to both national classification and IPC

B. FIELDS SEARCHED

Minimum documentation searched (classification system followed by classification symbols)
Int.Cl[7] H01G9/058, 9/038

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-282369 A (Osaka Gas Co., Ltd.), 03 October, 2003 (03.10.03), Claim 1 (Family: none) | 1-7 |
| A | JP WO 2002-076924 A1 (Nisshinbo Industries, Inc.), 03 October, 2002 (03.10.02), Claims (Family: none) | 1-7 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 April, 2005 (27.04.05) | 17 May, 2005 (17.05.05) |
| Name and mailing address of the ISA/ Japanese Patent Office | Authorized officer |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 61032509 A
- JP 63173312 A
- JP 10055717 A
- JP 62252927 A
- JP 6061095 A
- JP 2002110472 A
- JP 3010630 W


### Non-patent literature cited in the description


- **J.C.P. BROEKHOFF ; J.H. DEBORE.** *J. Catalysis,* 1967, vol. 9, 15
- **R.SH MIKHAIL ; S. BRUNAUER ; E.E. BODOR.** *Journal of Colloid and Interface Science,* 1968, vol. 26, 45-53